# EUROPEAN PATENT APPLICATION

(11) **EP 3 542 984 A2**
(43) Date of publication of application: **25.09.2019**
(21) Application number: 19163183.7
(22) Date of filing: 15.03.2019
(51) Int. Cl.: B29C 45/33, B29C 45/40, B29C 45/44, B29C 33/44

(54) **LIFTER DEVICE FOR MOLDS**

(30) Priority: 22.03.2018 IT 201800003877
(71) Applicant: Ermanno Balzi S.r.l., 25080 Mazzano (BS) (IT)
(72) Inventor: BALZI, Ermanno, 25080 Mazzano, Brescia (IT)
(74) Representative: Pulieri, Gianluca Antonio

(57) **Abstract**

A lifter device (1) for the extraction of molded parts made of plastic or non-ferrous materials with an undercut comprises a rod (2), a block (4) applicable to the front end (22) of the rod (2), intended to be shaped by the user, and connection means (6) for the reversible mechanical connection of the block (4) to the rod (2).

## Description

The present invention is in the field of molding of plastic and non-ferrous materials, and in particular in the field of accessories for molds. In particular, the object of the present invention is a lifter device that may be used to extract a molded piece with an undercut from the mold.

As is well known, the production of molded parts with undercuts is one of the most significant problems in the field of plastic molding.

To extract the molded part with undercut from the mold, lifters intended to be connected to a lifter plate are generally used. These lifters are normally made ad hoc for each application, taking into account the shapes, undercuts, overall dimensions, etc. Generally, they are made by the same molder, if equipped with a workshop, or commissioned to a mold manufacturer.

Examples of such lifter devices are shown in the brochure "KTM Lifter Retainer Key TY Series" and in the document WO-A1-2017/218091.

The object of the present invention is to create a lifter device that, while ensuring high quality production standards, in terms of manufacturing tolerances of the pieces, is easily adaptable to the specific needs of molding.

Such object is achieved by a lifter device according to claim 1. The dependent claims describe further advantageous embodiments of the invention.

The features and advantages of the lifter device according to the present invention will be apparent from the description given below, provided by way of nonlimiting example, in accordance with the accompanying figures, wherein:

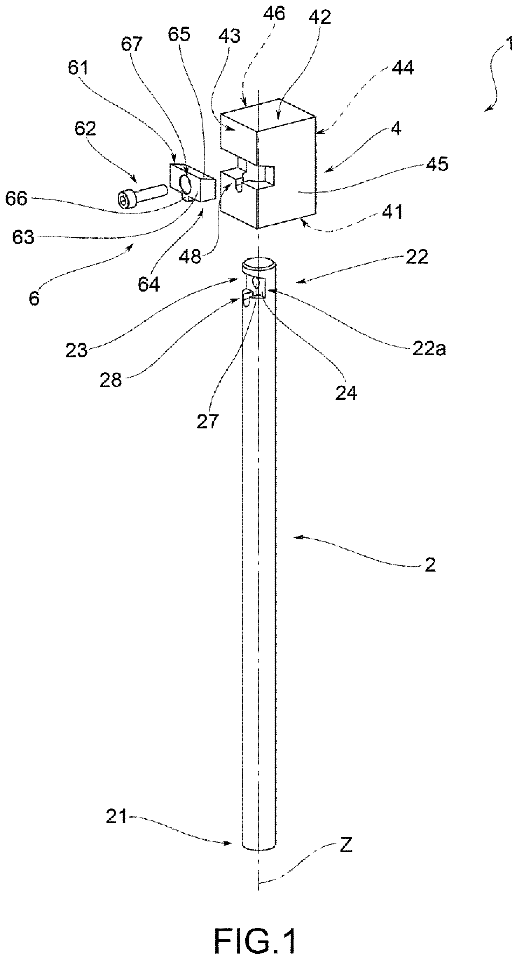

- Figure 1 shows a lifter device according to an embodiment of the invention, in separate parts;

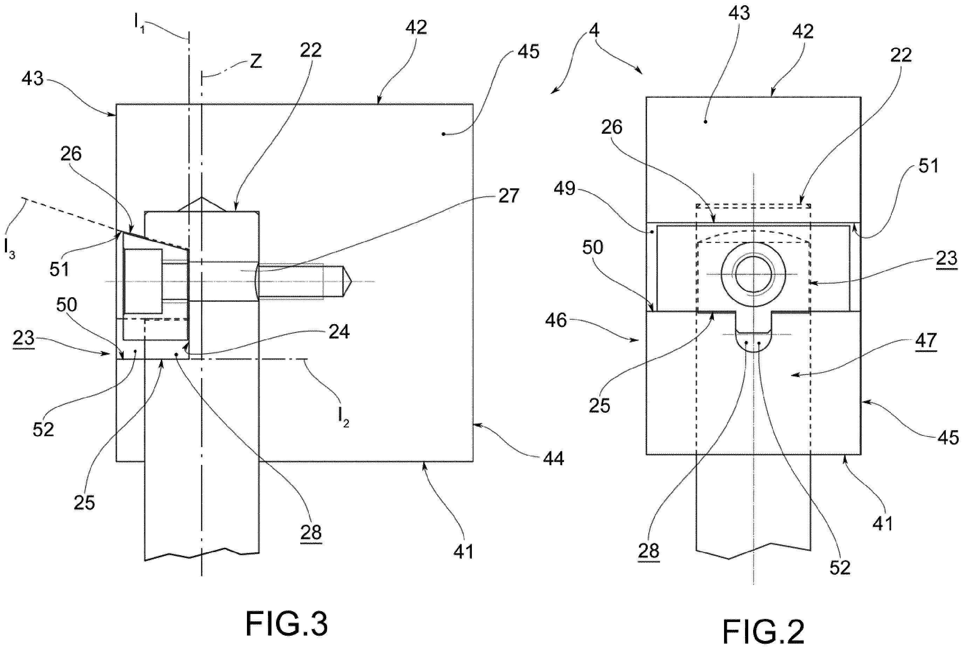

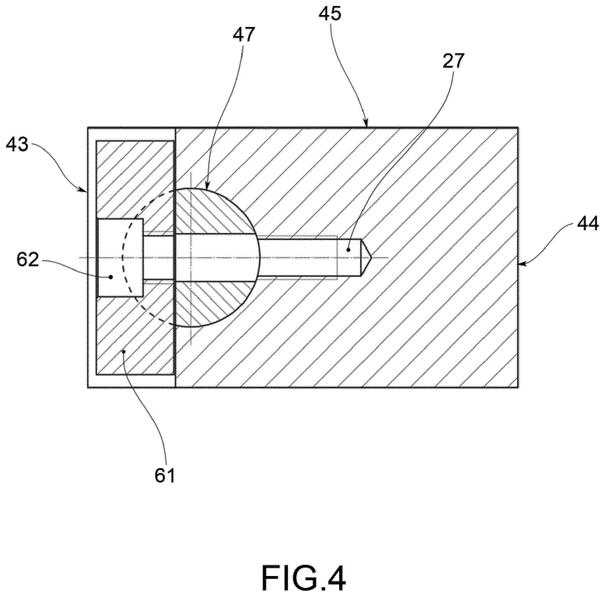

- Figures 2, 3 and 4 show plan views of the lifter device;
- Figure 5a represents a machining mask for the lifter device, according to an embodiment;
- Figures 5b, 5c and 5d represent a preferred embodiment of a machining mask for the lifter device;
- Figures 6 and 7 show the lifter device applied to a mold group with lifter plate in a molding configuration and an extraction configuration respectively;

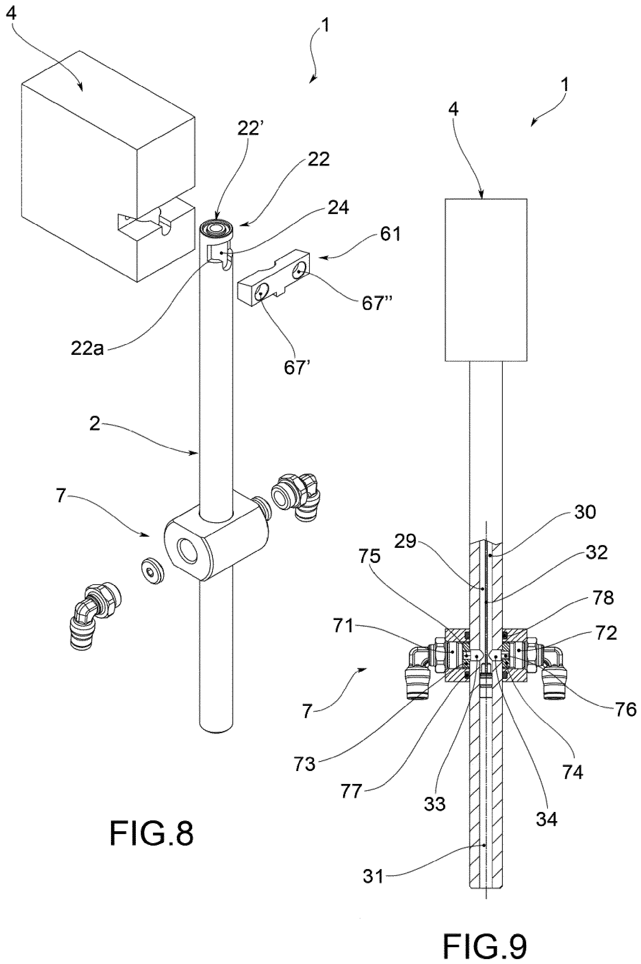

- Figure 8 shows a lifter device according to the present invention, according to a further embodiment, in separate parts;
- Figure 9 shows the lifter device of Figure 8, according to a sectional view; and

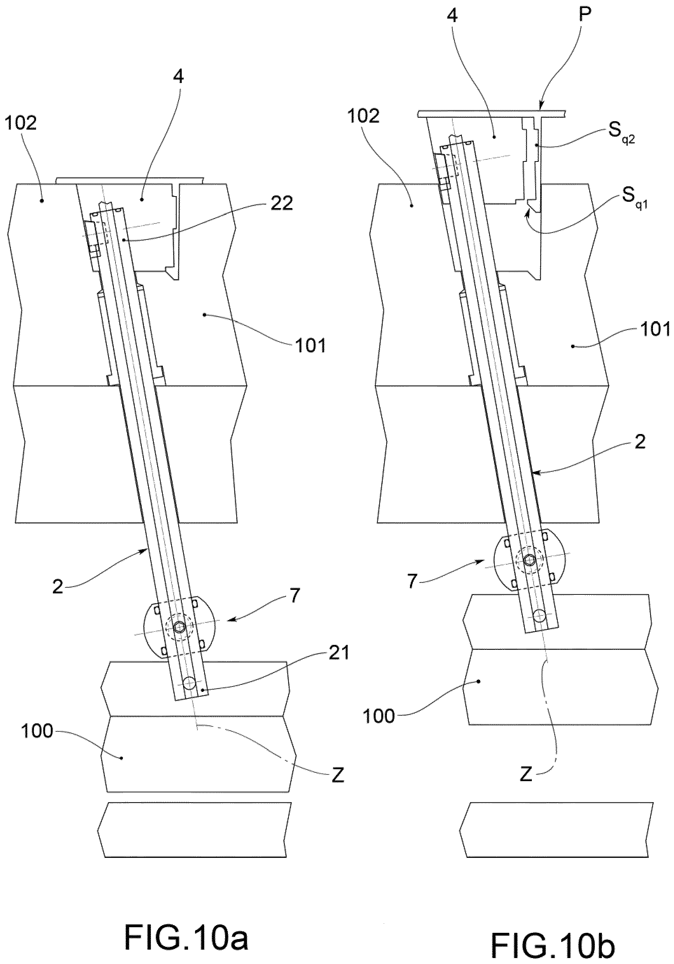

- Figures 10a and 10b show an example of the application of the lifter device in Figure 8.

With reference to the attached figures, a lifter device for the extraction of molded pieces made of plastic or non-ferrous materials is indicated collectively at 1.

The lifter device 1 comprises a rod 2, having a prevalent extension along a central rod axis Z, generally with a circular cross-section, with a long and thin shape, so as to be able to penetrate the thickness of the mold, as will be explained hereinafter.

The lifter device 1 further comprises a block 4 that may be connected to the end of the rod 2 in a releasable manner, and connection means 6 for the reversible mechanical connection of the block 4 to the rod 2.

The straight rod 2 extends from a rear end 21 to a front end 22, intended for connection with the block 4.

At the front end 22, the rod 2 has a rod seat 22a comprising a transverse rod seat 23, generally with a rectangular plan, defined by a bottom surface 24 and by respectively rear 25 and front 26 sides.

Preferably, the bottom surface 24 lies on an imaginary plane I1 parallel to the rod axis Z, far from said rod axis Z, the rear side 25 lies on an imaginary plane I2 perpendicular to the rod axis Z, and the front side 26 lies on an imaginary plane I3 inclined with respect to the rod axis Z, so as to form, with the bottom surface 24, an obtuse angle inside the seat 23.

**On** the bottom surface 24, a threaded connection hole 27 opens, preferably blind, with the hole axis preferably perpendicular to the rod axis Z.

In addition, the rod seat 22a comprises a longitudinal rod seat 28, which opens along the transverse rod seat 23, for example, in an intermediate position along the rear side 25.

Ultimately, the transverse rod seat 23 and the longitudinal rod seat 25 together form the rod seat 22a having a T-shape.

The block 4 has a substantially prismatic shape, generally with a rectangular or square base. A rear base 41, a front base 42, a top face 43, preferably tapered towards the center, a lower face 44, a first side face 45 and a second side face 46 are thus defined.

The block 4 is intended for coupling with the rod 2 from the part of the rear base 41, on which opens a main hole 47, preferably blind, into which the front end 22 of the rod 2 may be inserted.

On the upper face 43, the block 4 has a block seat 48 having a depth so as to intercept the main hole 47; said block seat 48 takes the shape of the rod seat 22a, configuring itself as a guide to said rod seat 22a.

In particular, the block seat 48 comprises a transverse block seat 49, with rear 50 and front sides 51; the front side 51 is inclined as is the front side 26 of the transverse rod seat 23.

Moreover, the block seat 48 comprises a longitudinal block seat 52, which opens along the transverse block seat 49, preferably in an intermediate position along the side; the longitudinal block seat 49 takes the shape of the longitudinal rod seat 28.

Once the front end 22 of the rod 2 has been inserted into the block 4, said front end is brought in abutment in the main hole 47 of the block, and in this position, the rod seat 22a is accessible from the outside through the block seat 48.

The connection means 6 are suitable for the stable mechanical connection of the block 4 to the rod 2 in a releasable manner.

In particular, said connection means 6 comprise a main prismatic body 61, which takes the form of the block seat 48 and the rod seat 22a, and a main screw 62.

In particular, the main body 61 comprises a transverse portion 63, for example having a rear side 64 and a front side 65, the latter preferably inclined, and a longitudinal tooth 66 protruding along the rear side 64 or along the front side 65, for example in an intermediate position.

The main body 61 also has a through-hole 67 for the insertion of the main screw 62 of the connection means, which passes through the connection hole 27 of the rod 2 and is screwed into the block 4.

For the connection of the block 4 to the rod 2, the front end 22 of the rod 2 is inserted into the main hole 47 of the block 4, abutting axially therein.

The rod seat 22a is thus accessible from the outside via the block seat 48.

The main body 61 of the connection means is inserted in the block seat 48; in particular, the transverse portion 63 is inserted in the transverse block seat 49 and in the transverse rod seat 23, while the longitudinal tooth 66 is inserted into the longitudinal block seat 52 and into the longitudinal rod seat 28.

Finally, the main screw 62 is inserted and screwed in, passing through the main body 61 and the connection hole 27 of the rod 2 and is screwed into the block 4.

The rear side 64 of the main body 61 comes in contact with the rear side 50 of the block 4, while the front side 65 of the main body 61 rests on the front side 26 of the rod 2, thus recovering any dimensional play.

The block 4, initially prismatic in shape with a rectangular or square base, will be suitably shaped by the user through machining by chip removal, for example by milling, to be able to assume the shape necessary for the application.

For example, the front base 42 and the lower face 44 are suitably shaped to obtain the desired profile for the impression and to allow extraction from the mold.

Advantageously, the upper face 43 of the block 4 is not subject to machining, so as not to compromise the functionality of the connection with the rod 2 through the connection means 6.

To carry out this shaping, the block 4 must be suitably mounted on a machine tool; to carry out this mounting and machining of the block comfortably and safely, a machining mask 8 is provided comprising a support body 81.

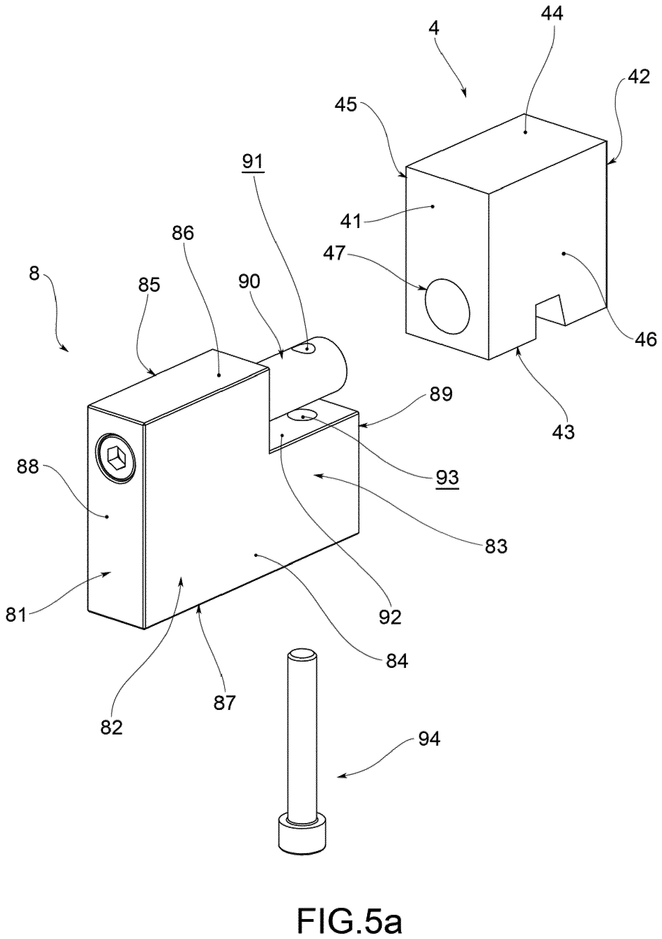

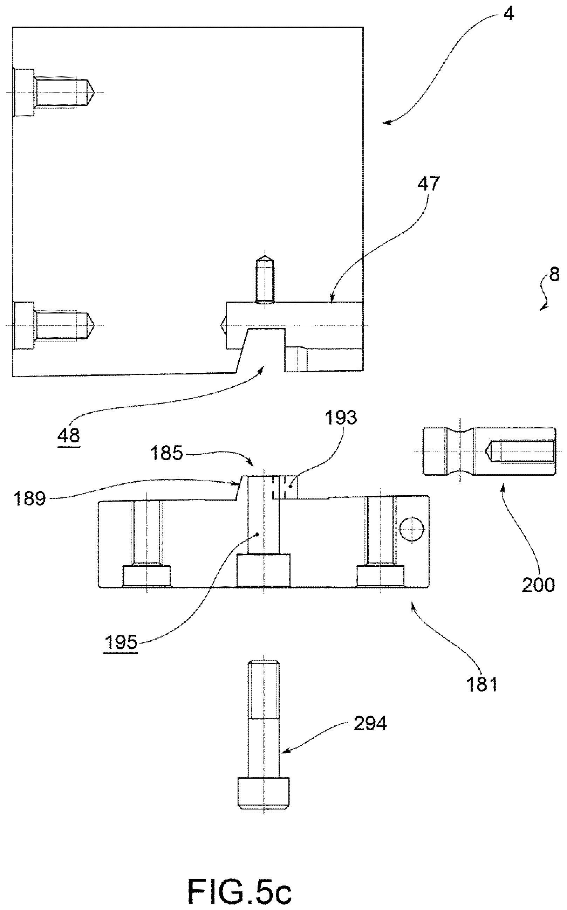

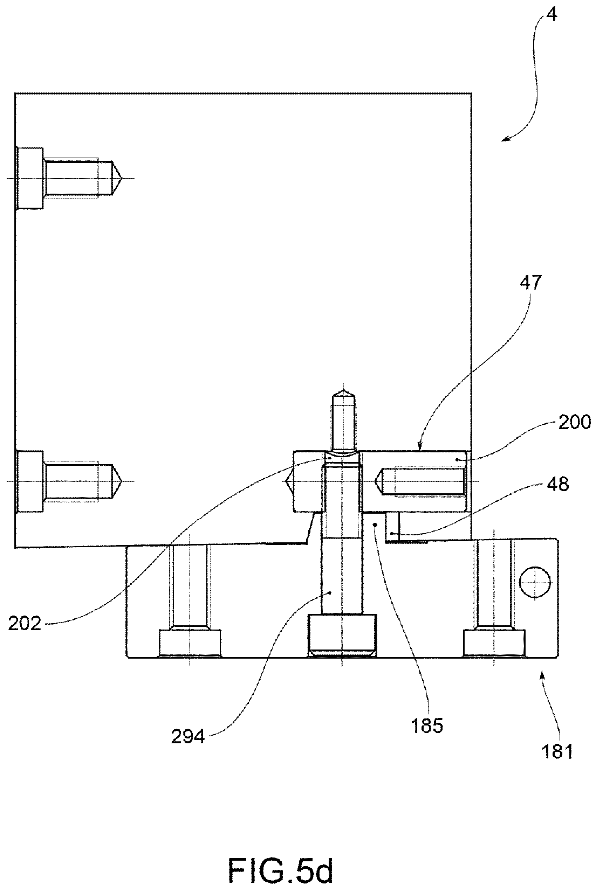

According to a first embodiment (Figure 5a), the support body 81 is prismatic, preferably L-shaped.

For example, the support body 81 comprises a gripping portion 82 and an engagement portion 83 protruding from the gripping portion 82.

Said portions 82, 83 define a first flat mask face 84 and a second flat mask face 85, opposite to the first, both L-shaped.

The support body 81 is further delimited by an upper face 86 of the gripping portion 82 and a lower face 87 of the gripping portion 82 and of the engagement portion 83, both flat, as well as by a rear face 88 of the gripping portion 82 and by a front face 89 of the engagement portion 83, also flat.

Said faces 84, 85, 86, 87, 88, 89 allow for the optimal grasping of the support body 81 by a vice.

The machining mask 8 further comprises a shank 90 fixed to the support body 81, protruding from the front of the gripping portion 82, so as to overhang the engagement portion 83; the shank 90, generally cylindrical, has a shank hole 91, threaded and through.

The shank hole 91 has a shank hole axis perpendicular to an upper face 92 of the engagement portion 83.

In addition, the support body 81 has an engagement hole 93 passing through the engagement portion 83, between the lower face 87 of the support body 81 and said upper face 92 of the engagement portion 83.

The engagement hole 93 is aligned with the shank hole 91.

The machining mask 8 further comprises a mask screw 94 insertable in the engagement hole 93 and screwed into the shank hole 91.

During normal use of the machining mask 8, the block 4 is inserted onto the shank 90 of the machining mask 8 through the main hole 47.

Once the block 4 has been inserted, the mask screw 94 is inserted in the engagement hole 93, passes through the block seat 48, and is screwed into the shank hole 91 of the shank 90, thus locking the block 4 to the support body 81.

The support body 81, which carries the block 4, is then locked by a vice of the machine tool, according to desired orientations, so as to perform on the block 4 the necessary machining to shape it.

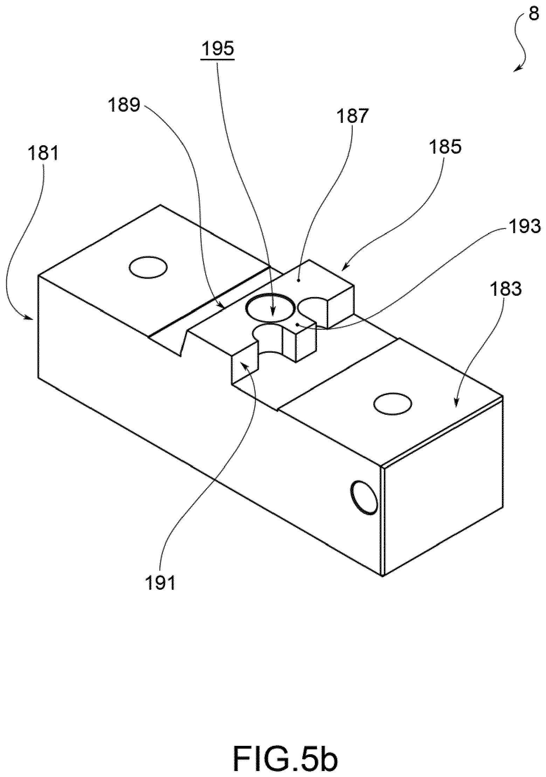

According to a preferred embodiment (figures 5b to 5d), the mask 8 comprises a prismatic support body 181, having an engagement face 183, which takes the shape of the upper face 43 and is therefore preferably tapered, from which protrudes an engagement portion 185, shaped as the main body 61 of the connection means.

In particular, the engagement portion 185 provides for a transverse part 187, having a front side 189, preferably inclined, and a rear side 191, as well as a longitudinal tooth 193 protruding from the front side 189 or from the rear side 191.

The support body 181 also has a through-hole 195 that also penetrates the transverse portion 187.

The support body 181 and the block 4 may therefore be coupled through the engagement portion 185 coupled to the block seat 48.

The mask 8 further comprises a tang 200, for example consisting of a cylindrical element that reproduces dimensionally the end of the rod 2, which may be inserted into the main hole 47 of the block 4. The tang 200 is provided with a transverse through hole 202.

The mask 8 finally comprises a mask screw 294.

For machining the block 4, the support body 181 is applied to the block through the engagement portion 185 coupled to the block seat 48, the shank 200 is inserted into the blind hole 47, and the mask screw 294 is inserted into the through hole 195 of the support body 181 and screwed into the transverse hole 202 of the tang 200.

The support body 181 may therefore be gripped by suitable gripping means of the machine tool.

Advantageously, in the preferred embodiment of the mask, the coupling between the support body 181, the tang 200 and the block 4 reproduces the coupling of the block 4 to the rod 2 through the main body 61 of the connection means and thus ensures a high precision.

Advantageously, moreover, the mask according to the preferred embodiment allows all the sides of the block 4 to be left unobstructed and ready for machining, except the upper face 43, coupled to the engagement face 183 of the support body 181. The block 4 may then be machined in a single vice of the machine tool.

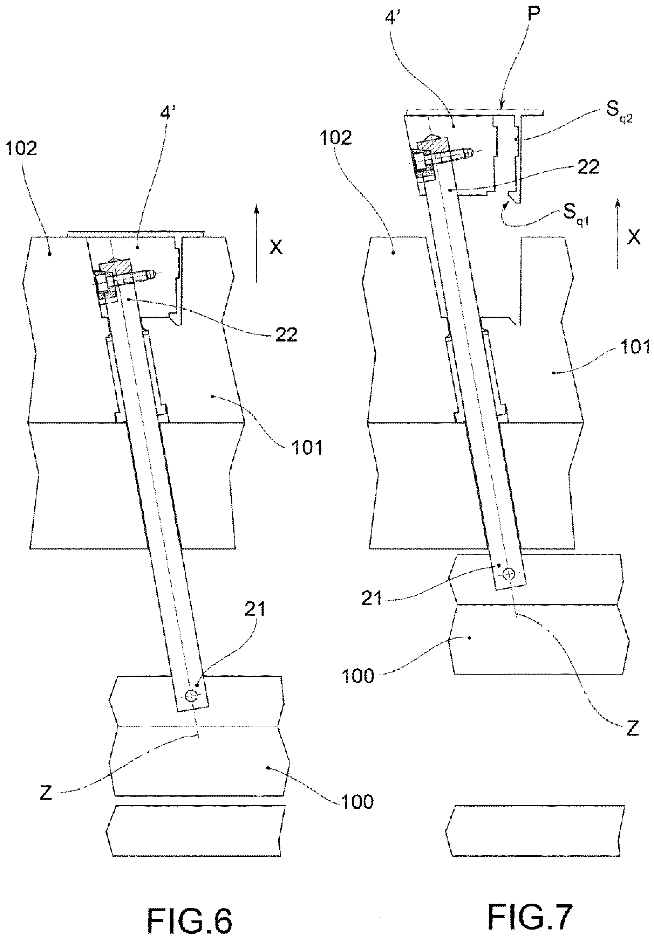

For normal use of the lifter device 1, equipped with the shaped block 4' deriving from the block 4, the rear end 21 of the rod 2 is usually hinged to a lifter plate 100 of the mold group, while the rod 2 penetrates the mold 101, so that the shaped block 4' is positioned in the front part 102 of said mold 101 (figure 6).

As a rule, the rod 2 is positioned inclined relative to the removing direction X of the movable and fixed parts of the mold.

Once the lifter plate 100 is close to the mold 101, the shaped block 4' extracts the molded piece P from the mold and at the same time frees the undercuts Sq1, Sq2 therefrom, so that the piece P may be removed.

According to a further embodiment, the lifter device 1 comprises a main body 61 of the connection means, equipped with two through holes 67', 67", made near the side ends of the transverse portion 63, and two main screws 62', 62'' to be inserted in the respective through holes 67', 67".

According to a further embodiment, the lifter device 1 is equipped with a cooling circuit.

In this embodiment, the rod 2 is equipped with two internal ducts 29, 30 of a rod cooling circuit, made along the rod axis Z; for example, said ducts 29, 30 extend from an intermediate position of the rod to the front end 22, appearing on the surface of the head 22' of the rod 2.

For example, said ducts 29, 30 are made by making a single hole 31 in the rod 2, for example, passing from the rear end 21 to the front end 22, into which a partition wall 32 is then inserted, separating the hole 31 into two ducts 29, 30.

Preferably, the partition wall 32 emerges from the hole 31, protruding for a stretch from the head surface 22' .

In this embodiment, the main body 61 is provided with two through holes 67', 67" arranged laterally (not to intercept the ducts 29, 30) for the engagement with the main screws 62', 62" and the block 4.

The block cooling circuit is made in the block 4 by the mold maker, depending on the geometry of the block itself and the piece to be molded.

For the hydraulic connection of the rod 2 to the coolant delivery circuit and return circuit, a connection body 7 is provided suitable to be inserted onto the rod 2 and sealingly connected with the ducts 29, 30, for example, by means of two transverse openings 33, 34 made in said rod 2.

The coupling body 7 has a pair of coupling holes 71, 72, which are through, radial and threaded.

Two inserts 73, 74 are also provided that may be inserted into said coupling holes 71, 72, provided with respective central passages 75, 76, preferably hexagonally shaped, and with respective centering cones, on the face intended for contact with the rod 2.

Said inserts 73, 74 may be screwed externally to the coupling holes 71, 72 and applied to the openings 33, 34 of the rod 2 by means of said centering cones.

Once the rod 2 has been inserted into the coupling body 7, brought to the position of the openings 33, 34, and the inserts 73, 74 have been inserted and screwed to the coupling holes 71, 72 and to the openings 33, 34, the coupling body 7 is firmly connected to the rod.

The seal is ensured, for example, by a pair of sealing rings 77, 78 placed between the coupling body 7 and the rod 2.

The coupling holes 71, 72 of the coupling body 7 are then usually connected to the coolant supply and return circuits respectively.

According to an example of application of the rod 2 to the cooling circuit, the coupling body 7 is placed along the rod 2, between the lifter plate 100 and the mold 101 of the mold group, in a position that does not interfere with normal operation.

Innovatively, the lifter device 1 according to the present invention overcomes the drawbacks mentioned above, as it allows the lifting means to be made quickly, machining blocks of standardized dimensions in a simple, effective and safe way.

In addition, the lifter device ensures very strict machining tolerances, as the coupling between the block and the rod is very precise, as well as simple to use and reversible.

It is clear that one skilled in the art, in order to meet contingent needs, may make changes to the lifter device and to the machining mask described above, all contained within the scope of protection defined by the following claims.

## Claims

1. Lifter device (1) for the extraction of molded parts made of plastic or non-ferrous materials having an undercut, comprising:
- a rod (2), having a prevalent extension along a central rod axis (Z) between a rear end (21) and a front end (22);
- a block (4) applicable to the front end (22) of the rod (2);
- connection means (6) for the reversible mechanical connection of the block (4) to the rod (2);
wherein said connection means comprise a main body (61) having a transverse portion (63), provided with a rear side (64) and a front side (65), and a longitudinal tooth (66) protruding along the rear side (64) or the front side (65).

2. Lifter device according to claim 1, wherein the front side (65) is inclined.

3. Lifter device according to claim 1 or 2, wherein the longitudinal tooth (66) is placed in an intermediate position along the rear side (64) or the front side (65).

4. Lifter device according to any one of the preceding claims
- wherein, at the front end (22), the rod (2) has a rod seat (22a);
- wherein the block (4) has on a rear base (41) a main hole (47) for inserting the front end (22) of the rod (2);
- and wherein, on an upper face (43), the block (4) has a block seat (48) having a depth such as to intercept the main hole (47);
- so that, by inserting the front end (22) of the rod (2) into the block (4), the rod seat (22a) is accessible from the outside through the block seat (48).

5. Lifter device according to claim 4, wherein the main hole (47) is blind and the front end (22) of the rod (2) abuts against the bottom of said main hole (47).

6. Lifter device according to any one of the preceding claims, wherein the rod seat (22a) is T-shaped.

7. Lifter device according to any one of the preceding claims, wherein the block seat (48) is T-shaped.

8. Lifter device according to any one of the preceding claims, wherein said connection means comprise a main screw (62) suitable to penetrate a through hole (67) of the main body (61) and to screw into a connection hole (27) of the rod seat (22a).

9. Lifter device according to any one of the preceding claims, wherein the rod (2) has two internal and separate ducts (29,30), suitable to be sealingly coupled with a block cooling circuit which may be made in the block (4).

10. Lifter device according to claim 9, wherein said ducts (29,30) are made from a single hole made in the rod (2) and a partition wall (31) inserted in the hole to divide it and obtain said ducts (29,30).

11. Lifter device according to claim 10, comprising a coupling body (7) sealingly connectible to the rod (2), provided with coupling holes (71,72) for the fluidic connection respectively with a delivery circuit and a return circuit of the cooling liquid, said coupling holes (71, 72) being connectible to the ducts (29,30).

12. Machining mask (8) for a block (4), comprising:
- a prismatic support body (181) equipped with an engagement portion (185) provided with a transverse part (187) provided with a rear side (191) and a front side (189), and a longitudinal tooth (193) protruding along the rear side (191) or the front side (189), said engagement portion being couplable with shape-coupling to a block seat (48) of the block (4);
- a tang (200) equipped with a transverse through hole (202), insertable into a main hole (47) in the block (4);
- a mask screw (294) that passes through the support body (181) and may be screwed to the tang (200).

13. Extraction kit comprising:
- a lifter device (1) according to any one of claims 1 to 11; and
- a machining mask (8) according to claim 12.
